Europäisches Patentamt

(19) European Patent Office

Office européen des brevets

(11) **EP 1 153 523 B1**

(12) **EUROPEAN PATENT SPECIFICATION**

(45) Date of publication and mention
of the grant of the patent:
**18.05.2005 Bulletin 2005/20**

(51) Int Cl.⁷: **H04Q 7/38**

(86) International application number:
**PCT/EP1999/010083**

(21) Application number: **99968354.3**

(22) Date of filing: **17.12.1999**

(87) International publication number:
**WO 2000/038455 (29.06.2000 Gazette 2000/26)**

(54) **METHODS AND SYSTEMS FOR CONTROLLING HARD AND SOFT HANDOFFS IN RADIO COMMUNICATION SYSTEMS**

VERFAHREN UND SYSTEM ZUR STEUERUNG VON "HARD" UND "SOFT" HANDOFF IN FUNKKOMMUNIKATIONSSYSTEMEN

PROCEDES ET SYSTEMES PERMETTANT DE COMMANDER LES TRANSFERTS PAR TRANSMISSION SUCCESSIVE ET LES TRANSFERTS PROGRESSIFS DANS DES SYSTEMES DE RADIOCOMMUNICATION

(84) Designated Contracting States:
**AT BE CH CY DE DK ES FI FR GB GR IE IT LI LU MC NL PT SE**

(30) Priority: **18.12.1998 WOPCT/IB98/02071**
**15.12.1999 US 461030**

(43) Date of publication of application:
**14.11.2001 Bulletin 2001/46**

(73) Proprietor: **Telefonaktiebolaget LM Ericsson (publ)**
**164 83 Stockholm (SE)**

(72) Inventors:
• **JETZEK, Ulrich**
**D-90409 Nürnberg (DE)**
• **BLOMBERG, Petter**
**S-172 62 Sundbyberg (SE)**
• **JOHANSSON, Lars, B.**
**S-583 32 Linköping (SE)**
• **JONSSON, Sture**
**S-972 34 Lulea (SE)**
• **BUTOVITSCH, Peter**
**Shibuya-ku Tokyo 150-0000 (JP)**

(74) Representative: **Forsberg, Ulrika S.**
**Ericsson AB**
**Patent Unit Radio Networks**
**164 80 Stockholm (SE)**

(56) References cited:
**WO-A-96/31078**

EP 1 153 523 B1

## Description

## BACKGROUND

The present invention relates generally to methods and systems for radiocommunications and, more particularly, to such systems in which a connection can be handed over from one channel or base station to another.

The cellular telephone industry has made phenomenal strides in commercial operations in the United States as well as the rest of the world. Growth in major metropolitan areas has far exceeded expectations and is rapidly outstripping system capacity. If this trend continues, the effects of this industry's growth will soon reach even the smallest markets. Innovative solutions are required to meet these increasing capacity needs as well as maintain high quality service and avoid rising prices.

In cellular systems, the capability is typically provided to transfer handling of a connection between, for example, a mobile station and a base station to another base station, as the mobile station changes its position and so moves out of the coverage area of one base station and into the coverage area of another base station. This type of handoff is commonly referred to as an "intercell" handoff as the coverage areas associated with base stations are commonly referred to as "cells". Depending upon the quality of the current channel, it may also be desirable to transfer a connection from one channel of the base station to another channel supported by the same base station, which handoffs are commonly referred to as "intracell" handoffs.

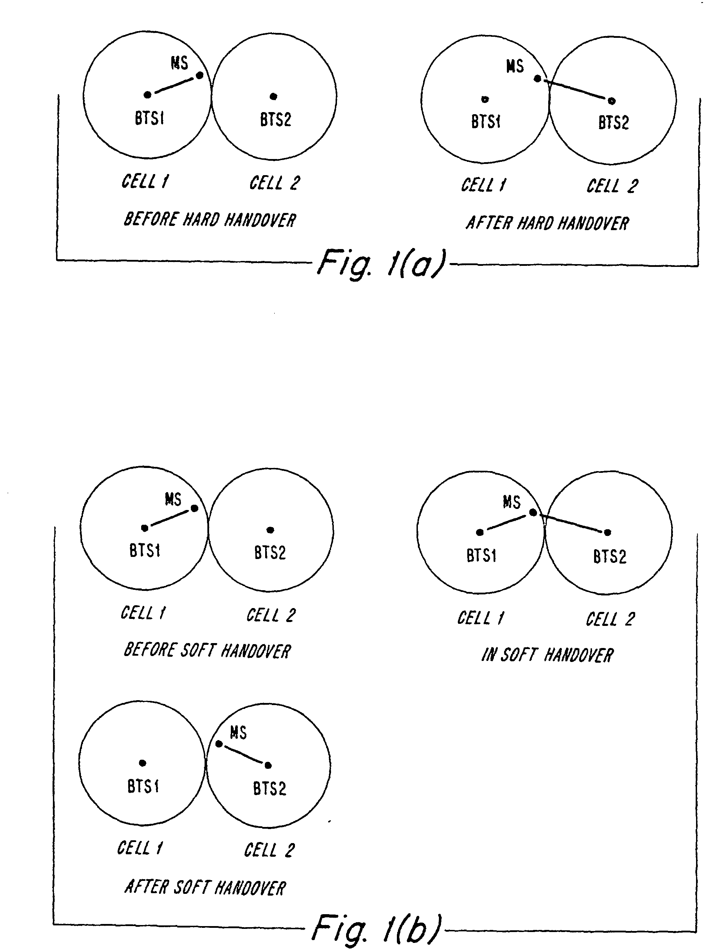

So-called "hard" handoffs refer to handoffs which are performed wherein there is no overlap in time between transmissions received from an original, serving base station and transmissions received from a new, target base station. As shown in Figure 1(a), during hard handoff, the mobile station (MS) typically first breaks its connection to its original base station (BTS1) and then establishes a connection to its new base station (BTS2).

By way of contrast, "soft" handoffs refer to handoffs wherein, for some period of time, a mobile station receives substantially the same information from two (or more) transmission sources. An exemplary soft handoff scenario is illustrated in Figure 1(b). Therein, before starting soft handoff, the MS is connected to BTS1. During the soft handoff, the MS establishes a connection to BTS2 without dropping the connection to BTS1. Each base station which is concurrently communicating with a particular mobile station may be referred to as a member of that mobile station's "active set". At some time after the connection to BTS2 is set up, the connection to BTS1 will be released which is the termination of the soft handover procedure. The overlapping transmissions from BTS1 and BTS2 permit the mobile station to smoothly switch from receiving information from its original, serving base station to receiving information from its new, target base station. During soft handoff, the mobile station may also take advantage of the fact that it is receiving substantially the same information from two sources to improve its received signal quality by performing diversity selection/combining of the two received signals.

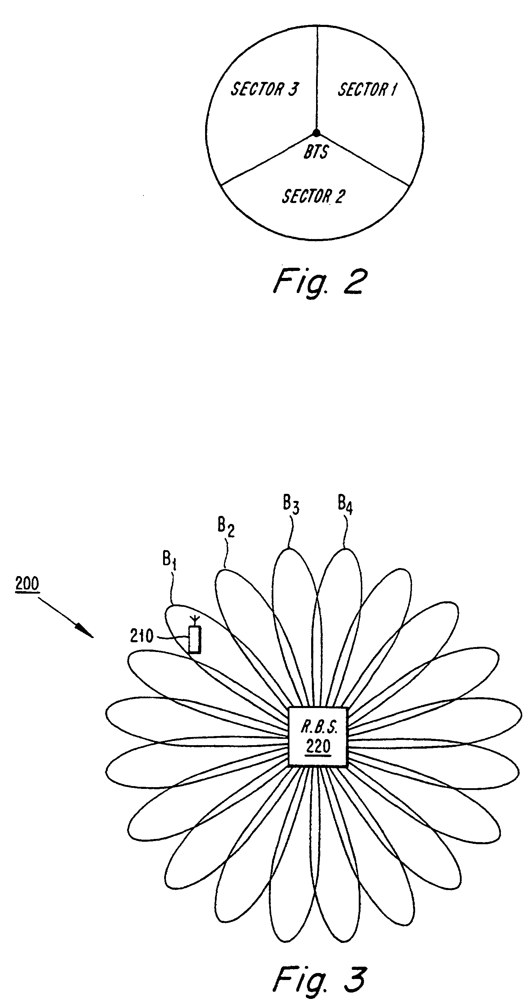

For the sake of simplicity, the foregoing examples of the hard and soft handoff were described in the context of base stations employing omnidirectional antennas, i.e., wherein each base station transmits signals which propagate in a substantially circular direction, i. e., 360 degrees, However, as will be appreciated by those skilled in the art, other antenna structures and transmission techniques may also be employed in radiocommunication systems. For example, a cell can be subdivided into several sectors, e.g., into three sectors where each sector covers a 120 degree angle as shown in Figure 2. Alternatively, the system or cell may employ an array antenna structure as shown in Figure 3. Therein, an exemplary radio communication system 200 includes a radio base station 220 employing a fixed-beam phased array (not shown). The phased array generates a plurality of fixed narrow beams ($B_1$, $B_2$, $B_3$, $B_4$, etc.) which radially extend from the base station 220, at least one of which ($B_1$) is used to communicate with MS 210. Preferably, the beams overlap to create a contiguous coverage area to service a radio communication cell. Although not shown, the phased array can actually consist of three phased array sector antennas.

Of course, the principles described above with respect to hard and soft handoff for omnidirectional antennas in Figures 1(a) and 1(b) can be directly mapped to other systems which employ sectorized and/or array antennas. In these latter types of systems, hard and soft handoffs can be performed between sectors or beams of the same base station as well as between sectors or beams associated with different base stations.

Both types of handoff have their drawbacks and advantages. On the one hand, soft handoff provides a robust mechanism for changing the connection from one base station to another. However, since the mobile station is connected to more than one base station during soft handoff, soft handoff requires more system resources than hard handoff. An advantage of hard handoff, therefore, is a reduced need for system resources, while its drawback is a higher probability of dropped calls when compared to soft handoff.

Both hard and soft handoffs are employed in some radiocommunication systems. For example, Figure 4 illustrates a system described in WO 96/02117, wherein soft and hard handoff are applied sequentially. Therein, a system containing two base station controllers, BSC1 and BSC2, is shown. BSC1 controls base stations BTS11, BTS12 and BTS13, while BSC2 controls base stations BTS21, BTS22, and BTS23. The area that is served by all of the base stations coupled to a BSC is called a "BSC area".

Assume for this example, that the mobile station (MS) moves from cell A served by the base station BTS12 to cell B, which is at the border between two BSC areas. Cell B is served by two overlapping base stations, BTS11 and BTS21. BTS11 is coupled to controller BSC1, and BTS21 is coupled to base station controller BSC2. As the MS moves to cell B, it carries out a soft handoff controlled by BSC1 to a traffic channel of base station BTS11.

Assume further that the MS continues onward toward cell C and finally enters into its area of radiocommunication coverage. The base station BTS22, serving cell C, is under the control of BSC2. Before it is possible to activate the base station BTS22 for the handoff, the call control must first be switched to base station controller BSC2 from the previous controller BSC1. This is accomplished by performing a hard handoff. The MS performs a hard handoff from the base station BTS11 to the base station BTS21, and consequently, the base station controller change from BSC1 to BSC2 takes place. Finally, a soft handoff from BTS21 to BTS22 is performed.

However, these techniques described in WO 96/02117 do not provide a mechanism for controlling the use of either soft or hard handoff. Instead, these techniques are simply provided as an intended mechanism for reducing interference and signaling overhead associated with the handoff of a mobile area from a service area under the control of a first BSC to a service area under the control of a second BSC. Thus, these techniques do not provide any solution for controlling the usage of soft and hard handoff between cells *per se.*

According to European Patent Application 817 517 A1, as illustrated in Figure 5, a technique is presented for determining an appropriate type of handoff for a mobile station. In the Figure, the received perch channel (i.e., a type of broadcast control channel) level is shown for the cell where the MS resides initially (solid line) as well as for a neighboring cell (dashed line). The received levels are given with respect to the position of the mobile station.

According to EP 817 517 A1, the handoff type judgement method for a CDMA mobile communication system provides different types of handoff with different handoff start conditions. A type of handoff for which a handoff start condition is weakest, among the available types of handoff at a mobile station, is evaluated first. It is determined whether the handoff start condition for this type of handoff is satisfied or not at the mobile station. Each base station is notified for carrying out that type of handoff when the handoff start condition for that handoff is satisfied.

However, the techniques described in EP 817 517 A1 require that the mobile station be informed for each sector regarding which type of handoff is available. Hence out of a number of possible cells/sectors suitable for handoff with, possibly, different available handoff types, the mobile station first has to select all cells/sectors that are available for the handoff type with weakest start condition. In a second step, a judgement among all of these cells/sectors will be performed. Thus, these techniques suffer from the drawbacks of having a two step procedure that requires intense signalling between the network (i.e., the base station) and the mobile station and that it is also quite complex to implement.

WO96/31078 discloses a method and apparatus for providing a reliable means to perform bandoff from a code division multiple access (CDMA) system using a pilot signal to an alternative access technique system. Pilot box circuitry is added to a set of border base stations operating only in the alternative access technique and having coverage areas, which are contiguous with coverage areas of CDMA base stations. The mobile unit monitors for the pilot signal from the border base stations in the same manner as it monitors for pilot signals from the CDMA base stations. When the mobile unit detects the pilot signal corresponding to a border base station, it notifies a system controller in accordance with standard operation. The system controller is aware that the pilot signal corresponds to a border base station and thus triggers a hard handoff process to the alternative access technique system in response thereto.

Accordingly, for radio communication systems capable of performing both soft and hard handoffs, there is a need to develop enhanced techniques to determine when a handoff is appropriate, and which type of handoff (soft/hard) is appropriate, to efficiently utilize system resources under different operating conditions.

## SUMMARY

These, and other, problems, drawbacks, and limitations of conventional handoff techniques, are overcome according to the present invention in which, for a radio communication system capable of performing both soft and hard handoffs, a mechanism is provided for flexibly controlling the usage of soft and hard handoffs. According to exemplary embodiments of the present invention, methods and systems determine which handoff type is preferred at a specific location under current radio conditions. Another object of the present invention is to control hard and soft handoff while at the same time minimizing the overhead signalling between the network and the mobile station of said radio communication system. Yet another object is to provide control methods and systems which are applicable to radiocommunication systems that use more than one frequency band to support communications in a cell/sector at the same time.

These, and other objects of the present invention are attained by a method for controlling handoff of a mobile station to a target transmission source in a radiocommunication system capable of performing both soft and hard handoffs, which comprises the steps of:

grouping a number of transmission sources of said system into at least two groups,

assigning a group identification to each of said groups,

assigning, to an active set associated with said mobile station, at least one transmission source from one of said groups,

selecting a soft handoff to occur to at least one target transmission source if said at least one target transmission source is within a group having the same group

identification as said at least one transmission source in said active set, and

selecting a hard handoff to occur to said at least one target transmission source if said at least one target transmission source is not within a group having the same group identification as said at least one transmission source in said active set.

In the method, a grouping of transmission sources (e.g., cells, sectors, base stations, beams or combinations thereof) is performed into groups which are denoted as softzones. Each softzone has its own softzone identity. Softzone identities can be reused for sectors which are not too close to each other. All members in the active set have the same softzone identity. However, each transmission source may belong to multiple softzones, i.e. it is possible that a transmission source is assigned to different groups.

Softzone handoff mechanisms according to the present invention provide a number of benefits. For example, the overhead signalling between the mobile station and the network associated with controlling handoff type selection will be reduced as compared, for example, to the techniques described in EP 817 517 A1. This is due to the fact that cells/sectors are grouped into different softzones instead of treating each cell/sector separately for the purpose of determining which type of handoff, if any, is appropriate. Moreover, these techniques provide a one-step procedure which permits great flexibility in the number of different handoff types that can be used.

Cell planners can use the softzone concepts described herein as a tool to take into account that between certain cells hard handoff might be more reasonable while between other cells a soft handover might be most suitable. Moreover, the grouping of transmission sources into particular softzones need not be static, e. g., a network operator may adjust softzone assignments based on changes to system structure (e.g., cell addition or cell splitting), changing load conditions, etc.. Softzones can also be automatically regrouped by way of a dynamic regrouping algorithms, e.g., based on current network resources, air interface resources and loading patterns.

In a soft handoff, at least one transmission source of the active set and at least one target transmission source in the handoff transmit substantially the same information to a mobile station at substantially the same time. In a hard hand off, a mobile station ceases receiving transmissions from one transmission source prior to receiving transmissions from a target transmission source. Soft handoffs may only be performed with transmission sources having the same softzone id as current members of the active set. Likewise, hard handoffs may only be performed to transmission sources having a different softzone id than current members of the active set.

Examples of suitable transmission sources include a cell, a base station, a frequency band, a beam associated with an antenna array and a sector. Preferably, the membership of transmission sources to a group can be readjusted.

A base station operating in a radiocommunication system can support communication on two or more different frequency bands. In this case, a suitable choice of the groups is that transmission sources in a first frequency band supported by said base station are assigned to one group.

The step of selecting a soft handoff preferably comprises the step of measuring a qualify level associated with transmission sources in at least one of said groups. The measured quality levels can then be evaluated in conjunction with at least one threshold. The membership in the active set of the mobile station can in this way be based on a result of the evaluating step. A preferable threshold can be adjusted. It can vary, for example, as a function of a quality level associated with a member of said active set.

Preferable quantities for the measurement of the quality level are for example the downlink signal-to-interference ratio, downlink received signal strength, downlink pathloss or downlink pathloss plus uplink interference. Combinations of different quantities can be used.

Preferably, group identifiers of transmission sources are transmitted to the mobile station.

A controller for controlling bandoff of a mobile station to a target transmission source in a radiocommunication system capable of performing both soft and hard handoffs comprises, according to the invention, preferably a processor for selecting a soft handoff of a connection from at least one first transmission source of said system, said at least one first transmission source having a first group identification assigned thereto, to at least one second transmission source of said system, said at least one second transmission source having a second group identification assigned thereto, when said first and second group identifications are the same. A transmission source can include for example one or more beams of an antenna array or one or more sectors associated with one or more base stations. A hard handoff of said connection from said at least one first transmission source of said system to said at least one second transmission source of said system is selected when said first and second group identifications are different. It is possible that a transmission source is assigned to both said first and second groups.

In a preferable embodiment, the transmission sources comprise transceivers disposed within a same base station but which support communications on different frequency bands.

In a preferable embodiment, a processor in the controller can reassign a transmission source from a first group identification to another group identification. The processor can be identical to or different form the processor selecting the transmission device.

The controller can be disposed in a switch of the communication network. Switches are nodes in the network of the communication system for controlling connections like for example a BSC (base station controller) or an MSC (mobile switching center) according to GSM or UMTS specifications or an RNC (radio network controller). The controller can also be disposed in a mobile station.

A preferable radiocommunication system (capable of performing both soft and hard handoffs) according to the invention comprises at least one first transmission source, having a first group identification assigned thereto and supporting a connection with a mobile station. A second transmission source has a second group identification assigned thereto. A processor associated with a network controller, e.g. a switch, for controlling operations of the transmission sources and said mobile station selects a soft handoff of the connection from said at least one first transmission source to said at least one second transmission sources when the group identifications are the same. When said first and second group identifications are different, a hard handoff of said connection from said at least one first transmission source to said at least one second transmission source is selected.

## BRIEF DESCRIPTION OF THE DRAWINGS

The foregoing, and other, objects, features and advantages of the present invention will be more readily understood upon reading the following detailed description in conjunction with the drawings in which:

Figure 1(a) is an illustration of hard handoff,
Figure 1(b) is an illustration of soft handoff,
Figure 2 depicts a base station employing sector antennas,
Figure 3 shows a base station employing an array antenna,

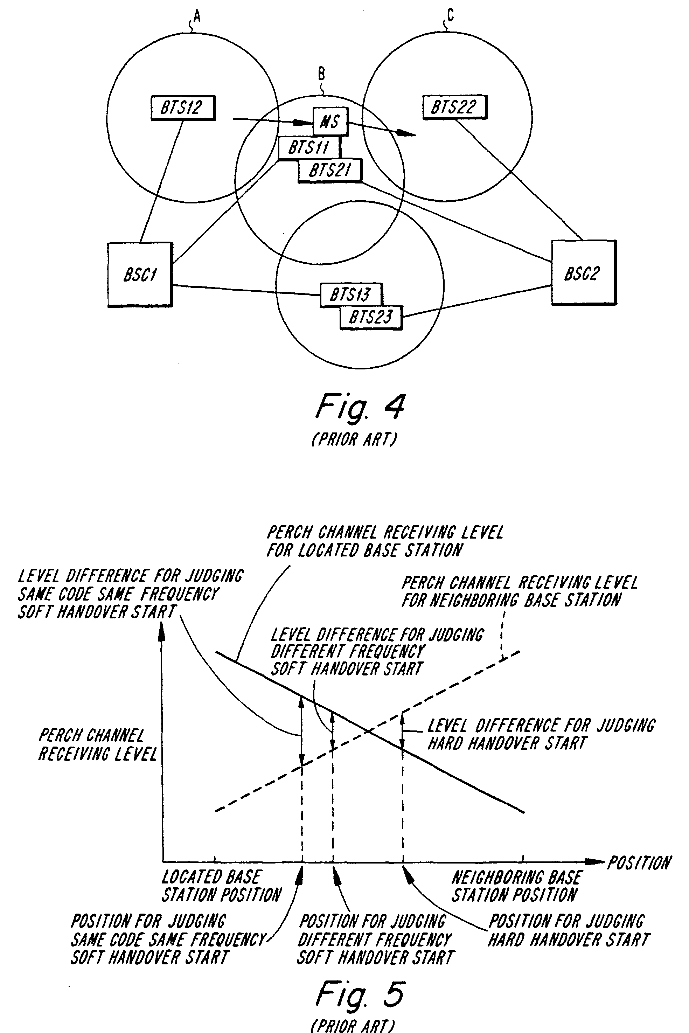

Figure 4 is an illustration of a conventional technique for performing sequential hard and soft handoffs to handoff a connection involving two base station controllers,
Figure 5 depicts another conventional technique for controlling different types of handoff,
Figure 6 is a block diagram showing various functional blocks of an exemplary mobile station.
Figure 7 is a graph illustrating various handoff algorithm conditions for adding, deleting and replacing sectors;
Figure 8 shows three cells grouped into two softzones used to describe exemplary embodiments of the present invention; and
Figure 9 is a graph of measured quality versus time used to explain handoff techniques according to exemplary embodiments of the present invention.

## DETAILED DESCRIPTION

In the following description, for purposes of explanation and not limitation, specific details are set forth, such as particular circuits, circuit components, techniques, etc. in order to provide a thorough understanding of the invention. However it will be apparent to one skilled in the art that the present invention may be practiced in other embodiments that depart from these specific details. In other instances, detailed descriptions of well-known methods, devices, and circuits are omitted so as not to obscure the description of the present invention with unnecessary details. For example, although not described in detail herein, the present invention is applicable to radiocommunication systems which employ any type of access methodology, e.g., Frequency Division Multiple Access (FDMA), Time Division Multiple Access (TDMA), Code Division Multiple Access (CDMA), or any hybrid thereof.

Moreover, this specification describes techniques that are applicable to different types of handoffs. However, these techniques can be applied to handoffs from or to any transmission source, e.g., a cell, a base station, a sector, a beam, a transceiver, etc. Accordingly, although the term "cell" is used primarily herein to illustrate how handoff mechanisms according to the present invention operate, it will be appreciated by those skilled in the art that these techniques apply equally to any type of transmission source.

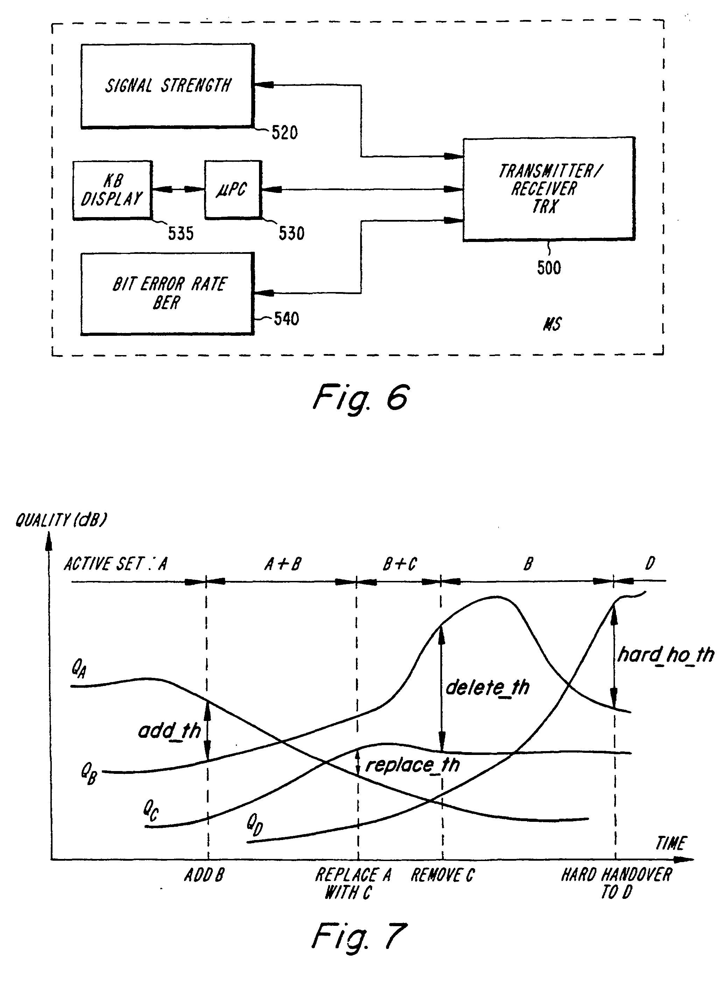

Prior to describing the details of the present invention, an example of the construction of a mobile station which can operate to perform the signal quality measurements described above is illustrated in Figure 6. This block diagram has been simplified to illustrate only those components relevant to the measurement of downlink signal strength, however those skilled in the art will be well aware of the other major functional blocks associated with mobile stations. In Figure 6, incoming radio signals are received by transmitter/receiver TRX 500. The timing is synchronized to the received symbol sequence by microprocessor controller 530. The strength of the received signals are measured by a signal strength measuring part 520, the value of which is then passed to microprocessor controller 530. The bit error rate (BER) of the received signal can also be determined as an indication of received signal quality as reflected by block 540. This measurement of received signal quality is particularly relevant in determining when an intracell handoff is desirable. Of course, the present invention is applicable to systems which use any type of quality measurement parameter, e.g., signal-to-interference ratio, received signal strength or pathloss. The mobile station will also have input/output devices, such as a keyboard and display 535, as well as a microphone and speaker unit (not shown), which enables information to be exchanged between the mobile station and the base station.

When the mobile station receives a list of channel numbers, codes or other channel identifying information in a measurement command, it will measure the received signal quality associated with each of those channels. Once the mobile station has made the requested measurements, at least two different evaluation techniques can be employed. First, if network evaluated handoff (NEHO) is employed, then the mobile station will report the measurements to the system which will then evaluate the various sectors using a handoff algorithm. Alternatively, if mobile evaluated handover (MEHO) is employed, then the mobile station itself will evaluate the various sectors.

An example is provided in Figure 7 to illustrate how the active set may change over time based on applying a handoff algorithm to these measurements. Taking as a given that there are four sectors (A,B,C,D) of interest in the handoff scenario of Figure 7, it is initially assumed that only sector A belongs to the active set. The measurement set in this example contains all sectors of the active set and all the neighbors of the active set, in this example A, B and C. Generally speaking, the measurement set contains all of the transmission sources for which the mobile station makes measurements. The measurement set typically includes all members of the active set, as well as transmission sources which are neighbors of the transmission sources in the active set. The measurement set is also typically defined by the network and periodically transmitted to the mobile station.

This exemplary handoff algorithm dictates that different handoff actions will be triggered according to the conditions stated below:

1. Add a sector: A sector X is added to the current active set if its quality $Q_x$ meets the following condition:

$$Q_x > Q_{best} - add\_th$$

where $Q_{best}$ represents the quality of the sector with the best quality in the Active Set and add_th is a threshold value. For example, as shown in Figure 7, sector B is added to the active set at the time instant marked 'Add B' since the difference between its quality level and the quality level received from sector A falls below add_th. Note that after time 'Add B', sector D is added to the measurement set because it is a neighbor to sector B.

2. Delete a sector: A sector X is deleted from the current active set if its quality $Q_x$ meets the following condition:

$$Q_x < Q_{best} - delete\_th$$

where delete_th represents the deletion threshold. An example of this condition occurring may be found at time instant marked 'Remove C' in Figure 7, wherein sector C is removed from the active set since the difference between its received quality level and that of sector B exceeds delete_th.

3. Replace a sector: The maximum number of cells allowed in the active set is limited. Once this maximum number is reached , the active set is said to be full. A sector X replaces the sector with the worst quality in the active set if the active set is full and the following condition holds:

$$Q_x > Q_{worst} + replace\_th$$

where replace_th represents the threshold used for sector replacement. Provided that the maximum number of sectors in the active set is two in Figure 7, sector C should replace sector A at time instant marked 'Replace A with C' in Figure 7.

4. Perform a hard handover: A hard handover from the current active set to a new sector is carried out if the quality $Q_x$ of sector X fulfills the following condition:

$$Q_x > Q_{best} + hho\_th$$

where hho_th represents the threshold used for hard handover, i.e., all connections of the current active set will be removed and a new connection to sector X will be set up. This is, for example, the case at the time instant marked 'hard handover to D' in Figure 7.

The actions described in this handoff algorithm to add, delete or replace a sector occur as soft handoffs in this example, unless the hard handoff threshold is exceeded in which case hard handoff takes precedence. However, according to exemplary embodiments of the present invention, additional control mechanisms are established to determine whether a soft or hard handoff is appropriate. More specifically, the present invention adopts an overlay mechanism referred to herein as a "softzone". The softzone is a group of cells, base stations or other transmission sources (e.g., sectors, beams, etc.) which can be identified by, for example, a softzone identification number (softzone id). Soft handoffs are then permitted only between members within the group having the same softzone id. The active set has a softzone identity which is referred to herein as the "active softzone identity". The softzone ids will be distributed from the network to the mobile station on either common or dedicated channels. Thus, the handoff rules described above with respect to Figure 7 are modified according to this exemplary embodiment such that:

1. When the quality of a measured cell (base station, transmission source, beam, sector, etc.) exceeds the value $Q_{best}$ - add_th (the addition threshold), and the measured cell has a softzone identity which is identical to the active softzone identity, then the cell will be added to the active set in a soft handoff action. If the measured cell has a different softzone identity than the active set cells, the measured cell will not be added to the active set, even though the quality of the measured cell exceeds $Q_{best}$ - add_th.

2. When the quality of a measured cell (base station, transmission source, beam, sector, etc.) drops below the value of $Q_{best}$ - delete_th (the deletion threshold), and the measured cell belongs to the current active set, then the cell will be deleted from the current active set as part of a soft handoff operation.

3. When the quality of a measured cell (base station, transmission source, beam, sector, etc.) exceeds the value of $Q_{best}$ + hho_th (the hard handover threshold), and the measured cell does not have a softzone identity which is identical to the active softzone identity, then a hard handoff will be performed to the measured cell. If the measured cell has the same softzone identity as the active set cells, no handoff action will be taken.

4. When the quality of a measured cell (base station, transmission source, beam, sector, etc.) exceeds the value of $Q_{worst}$ + rpl_th (the replacement threshold), and the measured cell has a softzone identity which is identical to the active softzone identity, then the measured cell will replace the active set cell with the worst quality.

Of course, the softzone identities must be known in the mobile station (in the case of MEHO) or in the network (in the case of NEHO). Thus, in the former case, the softzone identities will be transmitted to the mobile station beforehand. The values of the various handoff thresholds described herein may be fixed or may be variable with respect to, for example, the quality level of the best cell (base station, transmission source, beam, sector, etc.) in the active set.

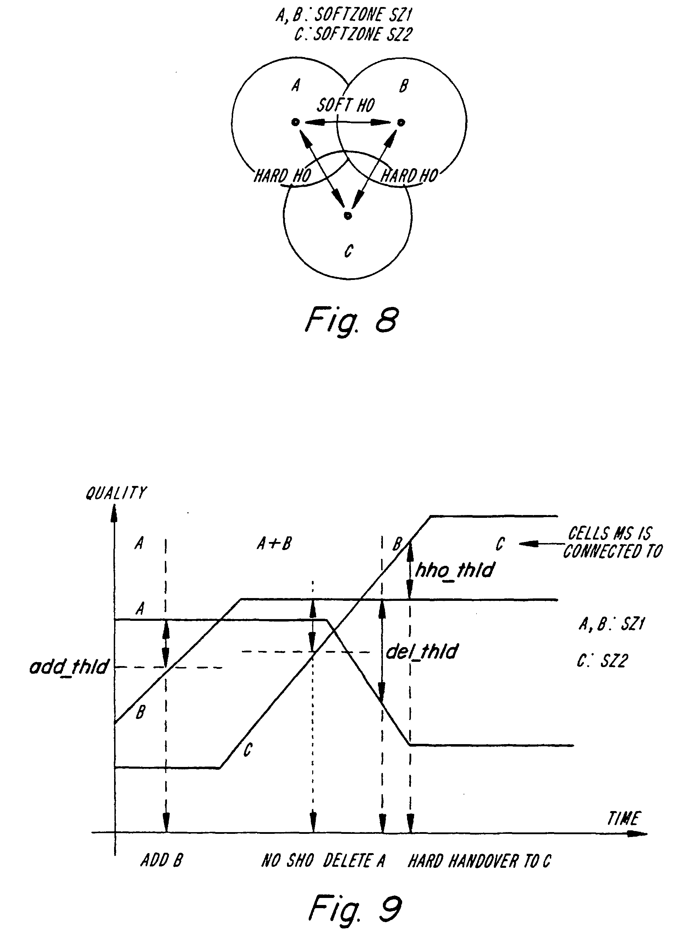

An illustrative example is provided in Figures 8 and 9 to further explain softzone handoff concepts according to exemplary embodiments of the present invention. In Figure 8, three cells (A, B and C) are depicted that belong to two different softzones SZ1 and SZ2 and, therefore have different softzone ids. Initially, for this example, assume that a mobile station (not shown in Figure 8) is only connected to cell A. When the quality of cell B satisfies the condition to add a cell, i.e., at time instant "add B" in Figure 9, a connection to cell B is added, since cells A and B both belong to softzone SZ1. Although the quality of cell C exceeds the addition threshold as well, i.e., at time instant "no SHO" in Figure 9, cell C is not added by way of soft handoff since cell C has a different softzone identity than the current members of the active set A and B.

After cell A has been deleted from the active set, i.e., at time instant "delete A" in Figure 9, the quality of cell C exceeds the hard handoff threshold. Thus a hard handoff will be performed that removes cell B from the active set and adds cell C thereto at time instant "hard handover to C" in Figure 9, since cell C belongs to softzone SZ2, while cell B belongs to softzone SZ1. Of course, if cells B and C had belonged to the same softzone, then no action would have been taken at time instant "hard handover to C" in Figure 9 because in this case cell c would have been added to the active set at time instant "no sho".

Softzone handoff mechanisms according to the present invention provide a number of benefits. For example, the overhead signalling between the mobile station and the network associated with controlling handoff type selection will be reduced as compared, for example, to the techniques described in EP 817 517 A1. This is due to the fact that cells/sectors are grouped into different softzones instead of treating each cell/sector separately for the purpose of determining which type of handoff, if any, is appropriate. Moreover, these techniques provide a one-step procedure which permits great flexibility in the number of different handoff types that can be used.

Cell planners can use the softzone concepts described herein as a tool to take into account that between certain cells hard handoff might be more reasonable while between other cells a soft handover might be most suitable. In rural areas, for example, line of sight links between mobile stations and base stations are rather frequent. Typically, even in case of hard handoff, a reliable handoff will be performed. On the other hand, in urban areas, line of sight links are rather rare. Furthermore, connection quality may be poor due to shadowing effects. For these reasons, a call is likely to get dropped during a hard handoff, thus creating a preference for soft handoff under these circumstances. In such a scenario, one softzone identity could be assigned to several adjacent urban cells while several different softzone identities could be assigned to rural cells.

Moreover, the grouping of transmission sources into particular softzones need not be static, e.g., a network operator may adjust softzone assignments based on changes to system structure (e.g., cell addition or cell splitting), changing load conditions, etc. Softzones can also be automatically regrouped by way of a dynamic regrouping algorithm, e.g., based on current network resources, air interface resources and loading patterns.

Further, it is anticipated that system capacity will most likely be increased by implementation of the present invention, since the present invention offers the possibility to control soft and hard handoff whereby efficient use of system resources is promoted.

The above-described exemplary embodiments are intended to be illustrative in all respects, rather than restrictive, of the present invention. For example, although the preceding exemplary embodiments do not reference multiple frequency bands, it will be apparent to those skilled in the art that the present invention is applicable to systems employing multiple frequency bands for communication and, therefore, to either intrafrequency or interfrequency band handoff. Moreover, the same or different softzone ids may be provided for different frequency bands used by the same base station to provide communication services. Of course, for mobile stations having only a single receiver, i.e., which can only tune to a single frequency band at a given time, it would then be preferable to provide different softzone ids to different frequency bands employed by a particular base station, i.e., to force hard handoffs rather than soft handoffs therebetween.

Thus the present invention is capable of many variations in detailed implementation that can be derived from the description contained herein by a person skilled in the art.

## Claims

1. A method for controlling handoff of a mobile station to a target transmission source in a radiocommunication system capable of performing both soft and hard handoffs, said method comprising the steps of:

   - grouping a number of transmission sources of said system into at least two groups,
   - assigning a group identification to each of said groups,
   - assigning, to an active set associated with said mobile station, at least one transmission source from one of said groups,
   - selecting a soft handoff to occur to at least one target transmission source if said at least one target transmission source is within a group having the same group identification as said at least one transmission source in said active set,
   - selecting a hard handoff to occur to said at least one target transmission source if said at least one target transmission source is not within a group having the same group identification as said at least one transmission source in said active set.

2. Method according to claim 1, wherein said transmission sources include at least one of:

   a cell, a base station, a frequency band, a beam associated with an antenna array and a sector.

3. Method according to any preceding claim, further comprising the step of:

   adjusting membership of transmission sources of at least one of said groups.

4. Method according to any preceding claim, wherein said transmission sources include base stations, and wherein at least one of said base stations supports communication on at least two different frequency bands, and wherein said step of grouping further comprises:

   grouping a first frequency band associated with said at least one of said base stations in one of said groups.

5. Method according to any preceding claim, wherein said step of selecting a soft handoff further comprises the steps of:

   - measuring a quality level associated with transmission sources in at least one of said groups,
   - evaluating said measured quality levels in conjunction with at least one threshold,
   - adjusting membership in said active set based on a result of said evaluating step.

6. Method according to claim 5, wherein said at least one threshold is variable.

7. Method according to claim 5 or 6, wherein said quality level is one of downlink signal-to-interference ratio, downlink received signal strength, downlink pathloss and downlink pathloss plus uplink interference.

8. Method according to claim 6 or 7, wherein said at least one threshold varies as a function of a quality level associated with a member of said active set.

9. Method according to any preceding claim further comprising the step of:

   distributing group identifiers of transmission sources to said mobile station.

10. Method according to any preceding claim, wherein at least one transmission source is assigned to different groups.

**11.** A controller for controlling handoff of a mobile station to a target transmission source in a radiocommunication system capable of performing both soft and hard handoffs with a processor for:

- selecting a soft handoff of a connection from at least one first transmission source of said system, said at least one first transmission source having a first group identification assigned thereto, to at least one second transmission source of said system, said at least one second transmission source having a second group identification assigned thereto, when said first and second group identifications are the same,
- selecting a hard handoff of said connection from said at least one first transmission source of said system to said at least one second transmission source of said system when said first and second group identifications are different.

**12.** Controller according to claim 11, wherein said at least one first and said at least one second transmission sources are transceivers disposed within a same base station but which support communications on different frequency bands.

**13.** Controller according to any of the claims 11 or 12, wherein said processor can reassign said at least one first transmission source from said first group identification to another group identification.

**14.** Controller according to any of the claims 11 to 13. wherein said controller is disposed in a mobile station.

**15.** Controller according to any of the claims 11 to 13, wherein said controller is disposed in a switch.

**16.** A radiocommunication system capable of performing both soft and hard handoffs, said system comprising:

- at least one first transmission source, having a first group identification assigned thereto and supporting a connection with a mobile station,
- at least one second transmission source, having a second group identification assigned thereto,
- a network controller for controlling operations of said at least one first and said at least one second transmission sources,
- a processor, associated with one of said network controller and said mobile station for:

  - selecting a soft handoff of said connection from said at least one first transmission source to said at least one second transmission source when said first and second group identifications are the same,
  - selecting a hard handoff of said connection from said at least one first transmission source to said at least one second transmission source when said first and second group identifications are different.

**Patentansprüche**

**1.** Verfahren zur Steuerung der Weiterschaltung einer Mobilstation zu einer Zielübertragungsquelle in einem Funkkommunikationssystem mit der Fähigkeit, sowohl sanfte als auch harte Weiterschaltungen durchzuführen, wobei das Verfahren die folgenden Schritte aufweist:

Gruppieren einer Anzahl von Übertragungsquellen des Systems in mindestens zwei Gruppen,
Zuweisen einer Gruppenkennung an jede der Gruppen,
Zuweisen mindestens einer Übertragungsquelle aus einer der Gruppen an eine der Mobilstation zugeordnete aktive Menge,
Wählen einer sanften Weiterschaltung zu mindestens einer Zielübertragungsquelle, wenn die mindestens eine Zielübertragungsquelle innerhalb einer Gruppe ist, die die gleiche Gruppenkennung hat wie die mindestens eine Übertragungsquelle in der aktiven Menge,
Wählen einer harten Weiterschaltung zu der mindestens einen Zielübertragungsquelle, wenn die mindestens eine Zielübertragungsquelle nicht innerhalb einer Gruppe ist, die die gleiche Gruppenkennung hat wie die mindestens eine Übertragungsquelle in der aktiven Menge.

**2.** Verfahren nach Anspruch 1, wobei die Übertragungsquellen mindestens eines aufweisen:

eine Zelle, eine Basisstation, ein Frequenzband, einen einer Antennenanordnung zugeordneten Strahl und einen Sektor.

**3.** Verfahren nach einem der vorhergehenden Ansprüche, ferner mit den folgenden Schritten:

Ändern der Zugehörigkeit von Übertragungsquellen von mindestens einer der Gruppen.

**4.** Verfahren nach einem der vorhergehenden Ansprüche, wobei die Übertragungsquellen Basisstationen aufweisen und wobei mindestens eine der Basisstationen Kommunikation auf mindestens zwei verschiedenen Frequenzbändern unterstützt und wobei der Schritt des Gruppierens ferner den folgenden Schritt umfaßt:

Gruppieren eines ersten Frequenzbandes, das der mindestens einen der Basisstationen zugeordnet ist, in einer der Gruppen.

5. Verfahren nach einem der vorhergehenden Ansprüche, wobei der Schritt des Wählens einer sanften Weiterschaltung ferner die folgenden Schritte umfaßt:

Messen eines Übertragungsquellen zugeordneten Qualitätsniveaus in mindestens einer der Gruppen,
Bewerten der gemessenen Qualitätsniveaus in Verbindung mit mindestens einem Schwellwert,
Ändern der Zugehörigkeit zu der aktiven Menge auf der Grundlage eines Ergebnisses des Bewertungsschritts.

6. Verfahren nach Anspruch 5, wobei der mindestens eine Schwellwert variabel ist.

7. Verfahren nach Anspruch 5 oder 6, wobei das Qualitätsniveau eines von folgendem ist: Signal-Störabstand der Abwärtsverbindung, Empfangssignalstärke der Abwärtsverbindung, Abwärtsverbindungsdämpfung und Abwärtsverbindungsdämpfung plus Aufwärtsverbindungsstörung.

8. Verfahren nach Anspruch 6 oder 7, wobei der mindestens eine Schwellwert als Funktion eines einem Element der aktiven Gruppe zugeordneten Qualitätsniveaus variiert.

9. Verfahren nach einem der vorhergehenden Ansprüche, ferner mit dem folgenden Schritt:

Verteilen von Gruppenkennungen von Übertragungsquellen an die Mobilstation.

10. Verfahren nach einem der vorhergehenden Ansprüche, wobei verschiedenen Gruppen mindestens eine Übertragungsquelle zugewiesen ist.

11. Steuereinrichtung zum Steuern der Weiterschaltung einer Mobilstation zu einer Zielübertragungsquelle in einem Funkkommunikationssystem mit der Fähigkeit, sowohl sanfte als auch harte Weiterschaltungen durchzuführen, mit einem Prozessor zum:

Wählen einer sanften Weiterschaltung einer Verbindung von mindestens einer ersten Übertragungsquelle des Systems, wobei der mindestens einen ersten Übertragungsquelle eine erste Gruppenkennung zugewiesen ist, zu mindestens einer zweiten Übertragungsquelle des Systems, wobei der mindestens einen zweiten Übertragungsquelle eine zweite Gruppenkennung zugewiesen ist, wenn die erste und zweite Gruppenkennung gleich sind,
Wählen einer harten Weiterschaltung der Verbindung von der mindestens einen ersten Übertragungsquelle des Systems zu der mindestens einen zweiten Übertragungsquelle des Systems, wenn die erste und zweite Gruppenkennung verschieden sind.

12. Steuereinrichtung nach Anspruch 11, wobei die mindestens eine erste und die mindestens eine zweite Übertragungsquelle Senderempfänger sind, die innerhalb der gleichen Basisstation angeordnet sind, die jedoch Kommunikation auf verschiedenen Frequenzbändern unterstützen.

13. Steuereinrichtung nach einem der Ansprüche 11 oder 12, wobei der Prozessor die mindestens eine erste Übertragungsquelle einer Zuweisungsänderung von der ersten Gruppenkennung in eine anderen Gruppenkennung unterziehen kann.

14. Steuereinrichtung nach einem der Ansprüche 11 bis 13, wobei die Steuereinrichtung in einer Mobilstation angeordnet ist.

15. Steuereinrichtung nach einem der Ansprüche 11 bis 13, wobei die Steuereinrichtung in einer Vermittlungseinrichtung angeordnet ist.

16. Funkkommunikationssystem mit der Fähigkeit, sowohl sanfte als auch harte Umschaltungen durchzuführen, wobei das System umfaßt:

mindestens eine erste Übertragungsquelle, der eine erste Gruppenkennung zugewiesen ist und die eine Verbindung mit einer Mobilstation unterstützt,
mindestens eine zweite Übertragungsquelle, der eine zweite Gruppenkennung zugewiesen ist,
eine Netzwerksteuereinrichtung zur Steuerung von Arbeitsschritten der mindestens einen ersten und der mindestens einen zweiten Übertragungsquelle,
einen Prozessor, der entweder der Netzwerksteuereinrichtungen oder der Mobilstation zugeordnet ist, zum:

Wählen einer sanften Weiterschaltung der Verbindung von der mindestens einen ersten Übertragungsquelle zu der mindestens einen zweiten Übertragungsquelle, wenn die erste und zweite Gruppenkennung gleich sind,

Wählen einer harten Weiterschaltung der Verbindung von der mindestens einen ersten Übertragungsquelle zu der mindestens einen zweiten Übertragungsquelle, wenn die erste und zweite Gruppenkennung verschieden sind.

**Revendications**

**1.** Procédé de commande de transfert d'une station mobile à une source de transmission cible dans un système de radiocommunication capable de réaliser à la fois des transferts temporaire et permanent, ledit procédé comprenant les étapes de:

groupage d'un nombre de sources de transmission dudit système dans au moins deux groupes,
assignation d'une identification de groupe à chacun desdits groupes,
assignation, à un ensemble actif associé à ladite station mobile, au moins une source de transmission à partir d'un desdits groupes,
sélection d'un transfert temporaire se produisant sur au moins une source de transmission cible si ladite au moins une source de transmission cible est dans un groupe ayant la même identification de groupe que ladite au moins une source de transmission dans ledit ensemble actif,
sélection d'un transfert permanent se produisant sur ladite au moins une source de transmission cible si ladite au moins une source de transmission cible n'est pas dans un groupe ayant la même identification de groupe que ladite au moins une source de transmission dans ledit ensemble actif.

**2.** Procédé selon la revendication 1, dans lequel lesdites sources de transmission comprennent au moins un:

d'une cellule, d'une station de base, d'une bande de fréquence, d'un faisceau associé à un réseau d'antennes et d'un secteur.

**3.** Procédé selon l'une quelconque des revendications précédentes, comprenant en outre l'étape de:

ajustement du membre des sources de transmission d'au moins un desdits groupes.

**4.** Procédé selon l'une quelconque des revendications précédentes, dans lequel lesdites sources de transmission comprennent des stations de base, et dans lequel au moins une desdites stations de base supporte une communication sur au moins deux bandes de fréquence différentes, et dans lequel ladite étape de groupage comprend en outre:

le groupage d'une première bande de fréquence associé à ladite au moins une desdites stations de base dans un desdits groupes.

**5.** Procédé selon l'une quelconque des revendications précédentes dans lequel ladite étape de sélection d'un transfert temporaire comprend en outre les étapes de:

mesure d'un niveau de qualité associé à des sources de transmission dans au moins un desdits groupes,
évaluation desdits niveaux de qualité mesurés en conjonction avec au moins un seuil,
ajustement d'un élément dans ledit ensemble actif sur la base du résultat de ladite étape d'évaluation.

**6.** Procédé selon la revendication 5, dans lequel ledit au moins un seuil est variable.

**7.** Procédé selon les revendications 5 ou 6, dans lesquelles ledit niveau de qualité est un du rapport signal sur interférence de liaison descendante, de la puissance de signal reçu de liaison descendante, de l'affaiblissement sur la voie de liaison descendante et de l'affaiblissement sur la voie de liaison descendante plus l'interférence de liaison montante.

**8.** Procédé selon les revendications 6 ou 7, dans lequel au moins un seuil varie en fonction d'un niveau de qualité associé à un élément dudit ensemble actif.

**9.** Procédé selon l'une quelconque des revendications précédentes comprenant les étapes de:

distribution des identifieurs de groupe des sources de transmission à ladite station mobile.

**10.** Procédé selon l'une quelconque des revendications précédentes, dans lequel au moins une source de transmission est assignée à différents groupes.

**11.** Dispositif de commande pour commander le transfert d'une station mobile à une source de transmission cible dans un système de radiocommunication capable de réaliser les transferts temporaire et permanent à la fois avec un processeur pour:

sélectionner un transfert temporaire d'une connexion à partir d'au moins une première source de transmission dudit système, ladite au moins une première source de transmission ayant une première identification de groupe assignée à celle-ci, à au moins une seconde source de transmission dudit système, ladite au moins une seconde source de transmission ayant une seconde identification de groupe assignée à celle-ci, lorsque lesdites premières et secondes identifications de groupe sont les mêmes, sélectionner un transfert permanent de ladite connexion à partir d'au moins une première source de transmission dudit système à ladite au moins une seconde source de transmission dudit système lorsque lesdites premières et secondes identifications de groupe sont différentes.

12. Dispositif de commande selon la revendication 11, dans lequel ladite au moins une première et ladite au moins une seconde source de transmission sont des émetteurs-récepteurs disposés dans une même station de base, mais qui supportent des communications sur différentes bandes de fréquence.

13. Dispositif de commande selon l'une quelconque des revendications 11 ou 12, dans lequel ledit processeur peut réassigner ladite au moins une première source de transmission à partir de ladite première identification de groupe à une autre identification de groupe.

14. Dispositif de commande selon l'une quelconque des revendications 11 à 13, dans lequel ledit dispositif de commande est disposé dans une station mobile.

15. Dispositif de commande selon l'une quelconque des revendications 11 à 13, dans lequel ledit dispositif de commande est disposé dans un commutateur.

16. Système de radiocommunication capable de réaliser des transferts à la fois temporaire et permanent, ledit système comprenant:

   au moins une première source de transmission, ayant une première identification de groupe assignée à celle-ci et supportant une connexion avec une station mobile,
   au moins une seconde source de transmission, ayant une seconde identification de groupe assignée à celle-ci,
   un dispositif de commande de réseau pour commander des opérations de ladite au moins une première et de ladite au moins une seconde source de transmission,
   un processeur associé à un dudit dispositif de commande de réseau et de ladite station mobile pour:

sélectionner un transfert temporaire de ladite connexion à partir d'au moins une première source de transmission à au moins une seconde source de transmission lorsque lesdites première et seconde identifications de groupe sont les mêmes, sélectionner un transfert permanent de ladite connexion à partir de ladite au moins une première source de transmission jusqu'à ladite au moins une seconde source de transmission lorsque lesdites première et seconde identifications de groupes sont différentes.

*Fig. 1(a)*

*Fig. 1(b)*

Fig. 2

Fig. 3

Fig. 4
(PRIOR ART)

Fig. 5
(PRIOR ART)

Fig. 6

Fig. 7

A, B: SOFTZONE SZ1
C: SOFTZONE SZ2

SOFT HO

A

B

HARD HO        HARD HO

C

## Fig. 8

QUALITY

A          A+B              B        C        CELLS MS IS
                                              CONNECTED TO

                                    hho_thld

A                                                      A, B: SZ1

add_thld                            del_thld           C: SZ2

B

C

TIME

ADD B        NO SHO  DELETE A   HARD HANDOVER TO C

## Fig. 9